# EUROPEAN PATENT SPECIFICATION

(11) **EP 1 656 592 B1**
(45) Date of publication and mention of the grant of the patent: **03.06.2009**
(21) Application number: 04811191.8
(22) Date of filing: 17.11.2004
(51) Int. Cl.: G03G 5/06, G03C 5/04, G03G 5/02, G03G 5/05, G03G 5/087, G03G 13/00, C09B 11/10, C07C 211/43

(54) **CHARGE CONTROL AGENT COMPRISING A MIXTURE OF A TRIPHENYLMETHANE COMPOUND AND A TETRAPHENYLMETHANE**
LADUNGSSTEUERMITTEL MIT EINER MISCHUNG AUS TRIPHENYLMETHANVERBINDUNG UND TETRAPHENYLMETHAN
AGENT DE CONTROLE DE CHARGE COMPORTANT UN MELANGE D' UN COMPOSE DE TRIPHENYLMETHANE ET D' UN COMPOSE DE TETRAPHENYLMETHANE

(30) Priority: 27.04.2004 US 832973
(43) Date of publication of application: 17.05.2006
(73) Proprietor: XSYS Print Solutions US LLC, Plymouth, MI 48170 (US)
(72) Inventor: ELLIS, Gary, Proctorville, Ohio 45669 (US); BARTRAM, Rhonda Sue, Chesapeake, Ohio 45619 (US); DA PONTE, Edward William, Canton, Michigan 48188 (US)
(74) Representative: Fiesser, Gerold Michael
(86) International application number: PCT/US2004/038381
(87) International publication number: WO 2005/109109

(56) References cited:
- US-A- 3 274 000
- US-A- 3 542 544
- US-A- 3 784 375

## Description

### BACKGROUND OF THE INVENTION

Electrophotographic processes are used to form images on substrates. Common electrophotographic processes are photocopying and laser printing. In these processes, a latent charge image is created. A toner is applied to the image, and the image is developed and is transferred to a substrate. The substrate can be anything that accepts the image, such as paper, textiles, plastic, or foils. The image is permanently affixed to the substrate by one or more of the following methods, heat, pressure, irradiation, or exposure to solvents.

The toner generally contains a binder, a colorant, an electrostatically chargeable component, and other auxiliary compounds. Toners need to be capable of acquiring and maintaining an electrical charge to allow the toner particles to be electrostatically bound to the image area until the toner can be fixed to the substrate.

Generally, the electrical charge is imparted to the toner by means of tribo-electric charging. Tribo-electric charging is static electric charge that is built up by the motion of the particles being stirred or otherwise flowing over one another. The tribo-electric charge is normally introduced in the toner by the addition of a charge control agent, which is a material capable of building and holding a charge. Charge control agents can be azo-metal dye complexes, quaternary amine salts, polymeric salts, or triphenylmethanes. The charge control agents may me colored or colorless depending on their structure.

It would be desirable to have a charge control agent that provides a desired positive charge level.

### SUMMARY OF THE INVENTION

The invention relates to a composition comprising a mixture of at least one triphenylmethane compound and at least one tetraphenylmethane compound, each having a general structure: 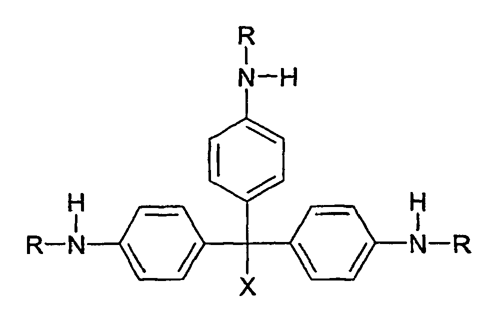 wherein, each R is independently H or a phenyl group; X is at least one of H and a carbocation on the methyl group of the triphenylmethane; X is -phenyl-NHY of the tetraphenylmethane, wherein Y is at least one of H, phenyl, and 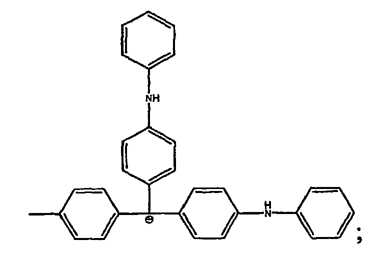 optionally, wherein any phenyl group on any compound may be substituted with a substituent.

### DETAILED DESCRIPTION

As used throughout, ranges are used as a shorthand for describing each and every value that is within the range. Any value within the range can be selected as the terminus of the range. When used, the phrase "at least one of" refers to the selection of any one member individually or any combination of the members. The conjunction "and" or "or" can be used in the list of members, but the "at least one of" phrase is the controlling language. For example, at least one of A, B, and C is shorthand for A alone, B alone, C alone, A and B, B and C, A and C, or A and B and C.

The invention relates to a composition comprising a mixture of at least one triphenylmethane compound and at least one tetraphenylmethane compound, each having a general structure: 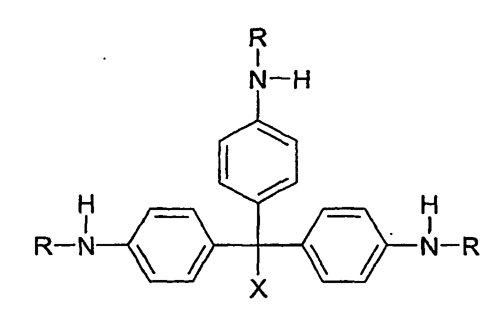 wherein, each R is independently H or a phenyl group; X is at least one of H and a carbocation on the methyl group of the triphenylmethane; X is -phenyl-NHY of the tetraphenylmethane, wherein Y is at least one of H, phenyl, and 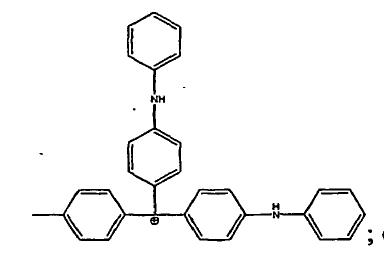 optionally, wherein any phenyl group on any compound may be substituted with a substituent.

The triphenylmethane with the carbocation can be present in a salt. The counter ion in the salt can be any negatively charged ion. The counter ion includes, but is not limited to, sulfates, nitrate, fluoride, chloride, tetrafluoroborate, hexafluorophosphorus, acetate, and trifluoroacetate. Preferably, the counter ion is a sulfate, and more preferably as a hemi-sulfate or a bisulfate.

The tetraphenylmethane can be present as a free base or as a salt. When present as a salt, the counter ion in the salt can be any negatively charged ion. The counter ion includes, but is not limited to sulfates, nitrate, fluoride, chloride, tetrafluoroborate, hexafluorophosphorus, acetate, and trifluoroacetate. Preferably, the counter ion is a sulfate, and more preferably as a sulfate or a bisulfate.

The optional substituent on any phenyl group includes, but is not limited to, halogen, alkyl, alkoxy, -CN, -COOR², wherein R² is an alkyl. Generally, the alkyl is a C1 to C4 alkyl, and the alkoxy is a C1 to C4 alkoxy.

Generally, it is desired for a charge control agent to have a charge capacity of at least 25 µC/g. The mixture can provide a charge capacity that is at least 25 µC/g. Generally, charging capacities are measured at 1% by weight loading level of charge control agent in the toner composition. The mixture is capable of tribo-charging in a range from 38 to 45µC/gram. This is greater than any of the materials in the mixture. The triphenylmethane materials charge at the rate of 35 to 40 µC/gram, and the tetraphenylmethane material charges at a rate of 15-35µC/gram. The combination of the materials in the mixture provides for a synergistic effect to achieve a greater tribo-charging. A method of measuring charge capability is given below.

In a preferred embodiment, the mixture is generally amorphous. The mixture can have up to 10% crystallinity as measured by X-ray diffraction.

The composition is softer than triphenylmethanes alone. Because it is softer, the composition can be more easily ground than triphenylmethane charge control agents. Because of the greater ability to grind, the color strength of the composition develops faster. Also, the charge control agent can be dispersed into a toner composition easier than triphenylmethane charge control agents alone. Also, the intrinsic strength is greater than with triphenylmethane charge control agents alone. Intrinsic strength is a specific maximum absorbance/reflectance of light that occurs as a function of molecular structure of a pigment. When a pigment is ground until no further increase in the intensity of color change can occur, it has reached its maximum intrinsic strength.

In the mixture, based on a combined weight of the at least one triphenylmethane and the at least one tetraphenylmethane in the mixture, the at least one triphenylmethane is present in the mixture in an amount from 40 to 80% based on mole fraction.

In a preferred embodiment, the mixture comprises 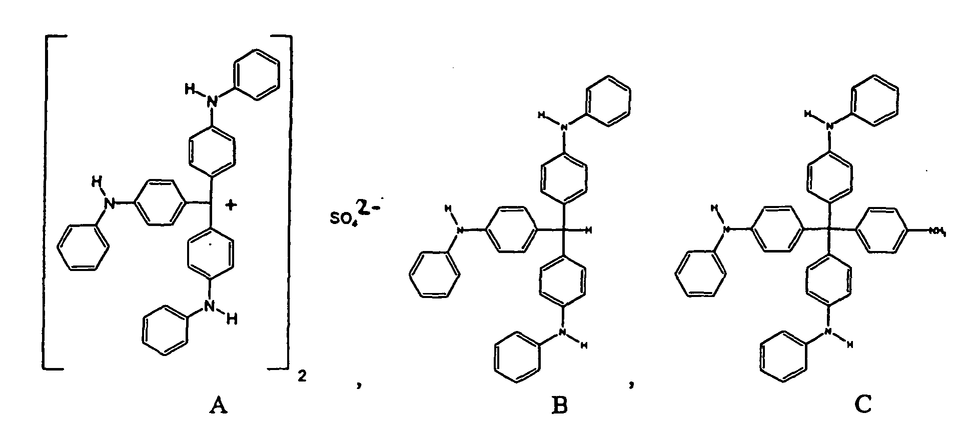 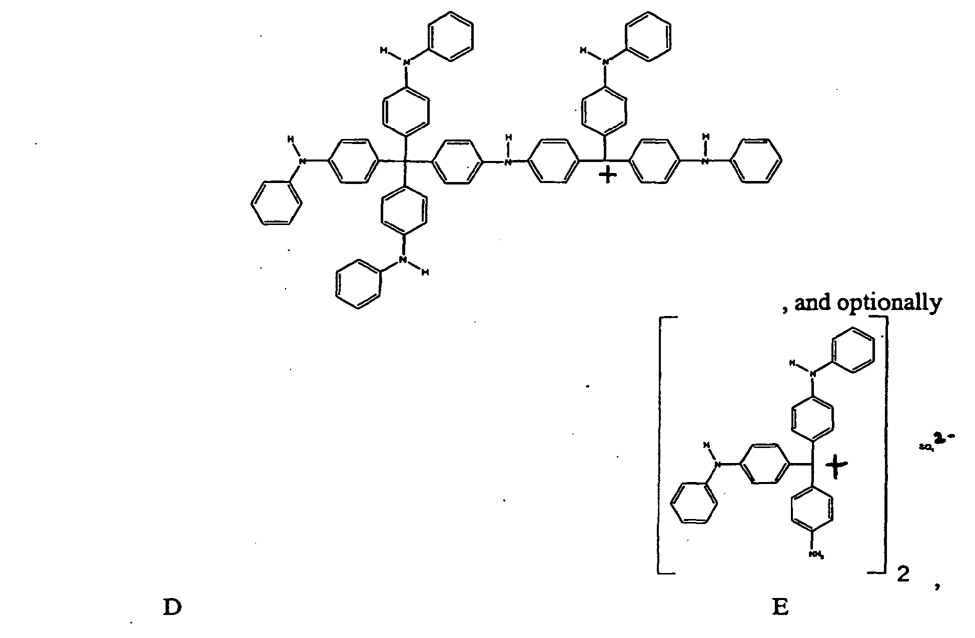 optionally, wherein D may be present as a salt. In a preferred embodiment, based on a total weight of the mixture, the compounds A, B, C, D, and E are present in the mixture in amounts of A) from 50 to 90%, B) from 1 to 10%, C) from about 1 to 50%, D) from 1 to 10%, and E) from 0 to 90%, and more preferably from greater than 1% to 50%, all based on mole fraction. In a preferred embodiment, A, B, C, D, and E are present in the mixture in amounts of A) from 58 to 69%, B) from 3 to 6%, C) from 3 to 27%, D) from 1 to 10%, and E) from 0 to 19%.

Preparation of Dye Feedstock

The reaction apparatus consists of a 3L three-necked flask, which is equipped with a bottom discharge valve, a pressure equalizing dropping funnel, a mechanical stirrer, a distillation head that is capable of operating in either reflux or distillation mode, a source of vacuum, and a heating jacket around the vessel. To the vessel, charge a solution consisting of 1 mole of Pararosaniline Base (Basic Red 9) and 14.9 moles of aniline; heat this mixture to 130°C with stirring. Once the temperature has been reached, add, via the pressure equalizing dropping funnel, 0.33 mole of acetic acid. Maintaining the vessel under reflux, raise the temperature to 175-182°C and hold at that temperature for 30 to 180 minutes depending upon the particular shade of blue desired (greener shades are produced using longer reaction times). Once the desired shade of blue is reached, switch the distillation head from reflux to distillation and apply vacuum to remove the aniline and any remaining un-reacted acetic acid. During this stripping phase the temperature of the reaction mixture will drop and then return to 180°C, at which point the reaction mixture may either be discharged directly to the dye sulfate precipitation reactor or it may be isolated by discharging it to a cooling pan, cooling belt, or other apparatus that will rapidly cool and solidify the product mixture.

The above reaction may be carried out with any carboxylic acid of sufficient acidity to catalyze the phenylation reaction; a non-exhaustive list of examples of these are as follows: napthenic acid; benzoic acid; toluic acid; p-chlorobenzoic acid; p-aminobenzoic acid; propionic acid; mono, di, and tri-chloroacetic acid; and mono, di, and tri-fluoroacetic acid.

The composition can be used in a toner composition for an electrophotographic process. The composition can be used as the charge control agent in the toner composition. Generally, the charge control agent is present in the composition in an amount from 0.25 to 5 % by weight of the total toner composition, and is preferably 0.5 to 2% by weight.

Toner binders include any binder that is used for toner compositions. Examples of these binders include, but are not limited to, (co)polymers of vinyl aromatics, (co)polymers of (meth)acrylates, (co)polymers of (meth)acrylonitrile, (co)polymers of vinyl ketones, (co)polymers of vinyl ethers, phenol-formaldehyde resins, oil modified epoxy resins, polyurethane resins, cellulose resins, polyether resins, polyesters, and combinations thereof.

The toner composition can contain any additional materials that are included in toner compositions as an additive.

CASCADE CHARGE MEASUREMENT

A styrene acrylic acid resin (such as CPR-200) is placed in a mixer containing a 1:1 (v/v) mixture of toluene/2-butanone with the styrene acrylic acid constituting 5% (w/w) of the mixture. This mixture is then stirred until the resin is fully dissolved, at which point sufficient charge control agent (CCA) is added to the mixture to represent 2% of the resin present. This is then stirred until the CCA is totally dissolved, as evidenced by the absence of any particles. A stainless steel plate is then dipped into the solution and fully coated with the resin/CCA solution. This is then allowed to air dry and then dried in a 70°C oven for a minimum of one hour. The stainless steel plate coated with a dry matrix of styrene/acrylic acid containing 2% CCA is then mounted on a poly tetrafluoroethylene (PTFE) block at a 60° angle in a Toshiba Cascade Charge Measurement unit. A stream of ferrite beads (diameter 74 - 147 microns) is then allowed to cascade onto the plate at a fixed rate under the force of gravity and after five minutes the accumulated charge is measured.

### SPECIFIC EMBODIMENTS OF THE INVENTION

The invention is further described in the following examples.

Example 1

In a 3L vessel, which was fitted with a heating jacket, a mechanical stirrer, and a bottom discharge valve, 930 grams of aniline ( 10 moles ) were added and heated with stirring to 125°C. Once the desired temperature was achieved, slowly added 400 grams of the colorant mixture (the mixture contains 10% aniline, leaving 360 grams of dye components ≈ 0.7 moles), which had been ground to a fine powder. Held at temperature and continued to stir until the dye components were fully dissolved. Into the dye sulfate precipitation vessel, which consisted of a 12L 316 stainless steel beaker, fitted with four stainless steel breakers, and a tangentially mounted high turbulence agitator, added 6000 grams of 20% sulfuric acid at 20-30°C. The agitator was operated at 3600 rpm (may be operated at 2400 - 4800 rpm). Discharged the aniline solution of dye into the turbulent region between the agitator blades and the breakers, completed the addition as rapidly as possible. Once the addition was completed, filtered the dye hemi-sulfate and washed it using warm (50-80°C) water, until no color was detected or the pH was > 4. The isolated, washed dye hemi-sulfate was then dried.

Example 2

Example 1 was repeated, except that 1070 grams p-toluidine (10 moles) were used instead of the aniline.

Example 3

Example 1 was repeated, except that 1210 grams of mixed xylidines (10 moles) were used instead of the aniline.

Example 4

In a 3L vessel, which was fitted with a heating jacket, a mechanical stirrer, and a bottom discharge valve, placed 930 grams of aniline ( 10 moles ) and heated with stirring to 125°C. Once the desired temperature was achieved, slowly add 400 grams of the colorant mixture (the mixture contained 10% aniline, leaving 360 grams of dye components ≈ 0.7 moles), which had been ground to a fine powder. Held at temperature and continued to stir until the dye components were fully dissolved.

An alternate method for precipitation of the dye hemi-sulfate mixture can be performed in the following apparatus. A reservoir that holds 20% sulfuric acid is attached to a pump capable of discharging 6000 grams per minute of acid solution. A dye solution vessel is attached via a heated line to a pump capable of discharging up to 2000 grams per minute. The two pumps discharge into a "Y" shaped nozzle, which immediately discharges into a high speed (3600 rpm) centrifugal pump, whose discharge passes through a helical static mixer into a receiving vessel, which connects to a filter.

Once the addition was completed, filtered the dye hemi-sulfate and washed it using warm (50-80°C) water until no color was detected or the pH was > 4. The isolated, washed dye hemi-sulfate was then dried.

Example 5

In a 3L vessel, which was fitted with a heating/cooling jacket, a mechanical stirrer, and a bottom discharge valve, placed 2000 grams of 80% sulfuric acid and cooled to 25°C. Once the desired temperature was achieved, slowly added 400 grams of the colorant mixture (the dye mixture contained 10% aniline, leaving 360 grams of dye components ≈ 0.7 moles), which had been ground to a fine powder. Allowed the temperature to slowly rise to 60-70°C (added heat as needed ) and continued to stir until the dye components were fully dissolved. Into the dye sulfate precipitation vessel, which consisted of a 12 L 316 stainless steel beaker, fitted with four stainless steel breakers, and a tangentially mounted high turbulence agitator, added 6000 grams of water at 20-30°C. The agitator was operated at 3600 rpm. Discharged the dye solution into the turbulent region between the agitator blades and the breakers, completed the addition as rapidly as possible. Once the addition was completed, filtered the dye hemi-sulfate and washed it using warm (50-80°C) water until no color was detected or the pH was > 4. The isolated, washed dye hemi-sulfate was dried.

Example 6

The reaction apparatus consisted of a 3L three-necked flask, which was equipped with a bottom discharge valve, a pressure equalizing dropping funnel, mechanical stirrer, distillation head which is capable of operating in either reflux or distillation mode, a source of vacuum, and a heating jacket around the vessel. To the vessel, charged a solution consisting of 305 grams ( 1 mole ) of Pararosaniline Base (Basic Red 9) and 1390 grams (14.9 moles) of aniline; heated this mixture to 130°C with stirring. Once the temperature was reached, added, via the pressure equalizing dropping funnel, 20 grams (0.33 mole) of acetic acid. Maintained the vessel under reflux, raised the temperature to 175-182°C and held at that temperature for 30 to 180 minutes depending upon the particular shade of blue desired (greener shades are produced using longer reaction times). Once the desired shade of blue was reached, switched the distillation head from reflux to distillation and applied vacuum to remove the aniline and any remaining un-reacted acetic acid.. During this stripping phase, the temperature of the reaction mixture dropped and then returned to 180°C, at which point the reaction mixture was discharged directly to the dye sulfate precipitation reactor.

This vessel, which consisted of a 12L 316 stainless steel beaker, fitted with four stainless steel breakers, and a tangentially mounted high turbulence agitator, added 6000 grams of 20% sulfuric acid at 20-30°C. The agitator was operated at 3600 rpm. Discharged the stripped molten dye into the turbulent region between the agitator blades and the breakers, completed the addition as rapidly as was possible while maintaining the drowning temperature below 40°C. Once the addition was completed, filtered the dye hemi-sulfate and washed it using warm (50-80°C) water until no color was detected or the pH was > 4. The isolated, washed dye hemi-sulfate was then dried.

## Claims

1. A composition comprising a mixture of at least one triphenylmethane compound and at least one tetraphenylmethane compound, each having a general structure: 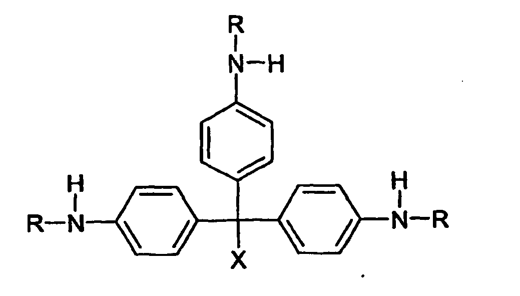 wherein, each R is independently H or a phenyl group; X is at least one of H and a carbocation on the methyl group of the triphenylmethane; X is -phenyl-NHY of the tetraphenylmethane, wherein Y is at least one of H, phenyl, and

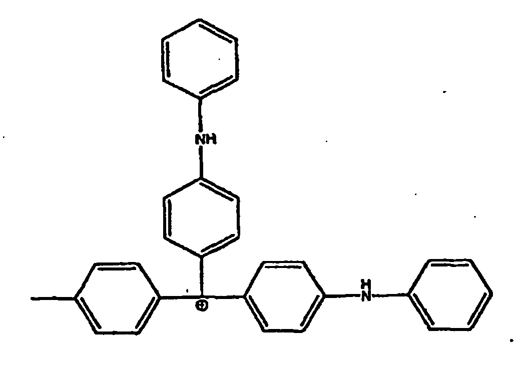

2. The composition of claim 1, wherein any phenyl group on any compound may be substituted with a substituent.

3. The composition of claim 1, wherein at least one of the triphenylmethane compounds is present as a triphenylmethyl carbocation in a salt.

4. The composition of claim 3, wherein the salt is at least one of a hemi-sulfate and a bisulfate.

5. The composition of claim 1, wherein the tetraphenylmethane compound is at least one of a free base and a salt.

6. The composition of claim 5, wherein the salt is at least one of a sulfate and a bisulfate.

7. The composition of claim 1, wherein the substituent is selected from the group consisting of halogen, alkyl, alkoxy, -CN, -COOR², and combinations thereof, wherein R² is an alkyl.

8. The composition of claim 1, wherein based on a combined weight of the at least one triphenylmethane and the at least one tetraphenylmethane in the mixture, the at least one triphenylmethane is present in the mixture in an amount from 40 to 80% based on mole fraction.

9. The composition of claim 1, wherein the mixture comprises: 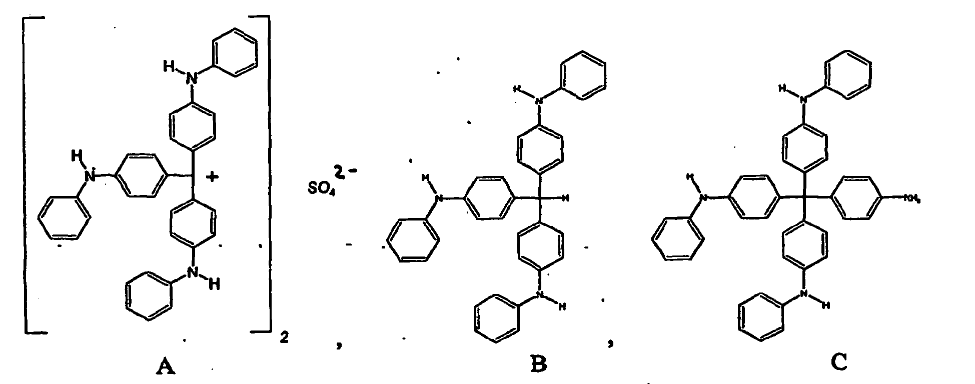 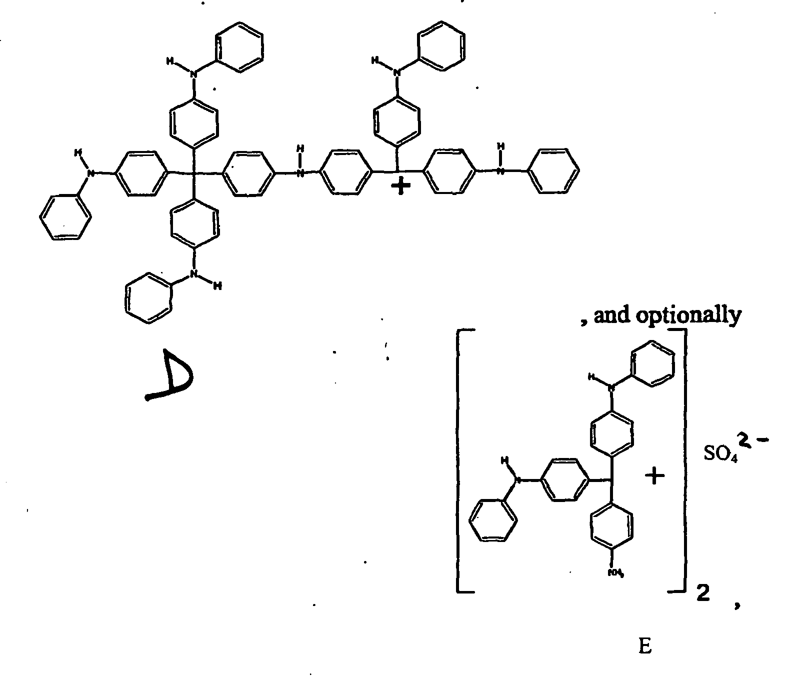 optionally, wherein D may be present as a salt.

10. The composition of claim 9, wherein based on a total weight of the mixture, the compounds A, B, C, D, and E are present in the mixture in amounts, based on mole fraction,
A) from 50 to 90%,
B) from 1 to 10%,
C) from 1 to 50%,
D) from 1 to 10%, and
E) from 0 to 90%.

11. The composition of claim 1, wherein the mixture is capable of tribo-charging in a range from 38 to 45 µC/gram.

12. The composition of claim 1, wherein the mixture is amorphous.

13. The composition of claim 1, wherein the mixture is present in a toner composition comprising a toner binder.

14. The composition of claim 13, wherein the mixture is present in an amount from 0.25 to 5 % by weight of the toner composition.

15. The composition of claim 13, wherein the toner composition has a charge capacity of at least 25 µC/g.

16. The composition of claim 13, wherein the toner composition has a charge capacity of from 38 to 45 µC/g.

17. The composition of claim 13, wherein the charge control agent is present in an amount of about 1% by weight of the composition, and the toner composition has a charge capacity of from 38 to 45 µC/g.

18. The composition of claim 13 further comprising at least one toner additive.

19. A method comprising using the composition of claim 1 as a charge control agent in a toner composition in an electrophotographic process.

## Patentansprüche

1. Zusammensetzung, umfassend eine Mischung aus mindestens einer Triphenylmethanverbindung und mindestens einer Tetraphenylmethanverbindung, jeweils mit der allgemeinen Struktur: 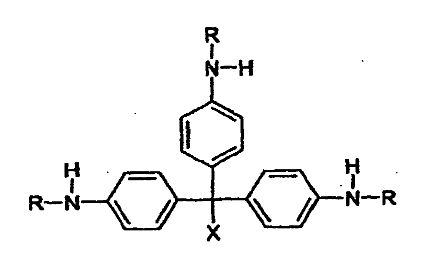 worin jedes R unabhängig für H oder eine Phenylgruppe steht; X für H und/oder ein Carbokation an der Methylgruppe des Triphenylmethans steht; X für -Phenyl-NHY des Tetraphenylmethans steht, wobei Y für H, Phenyl und/oder 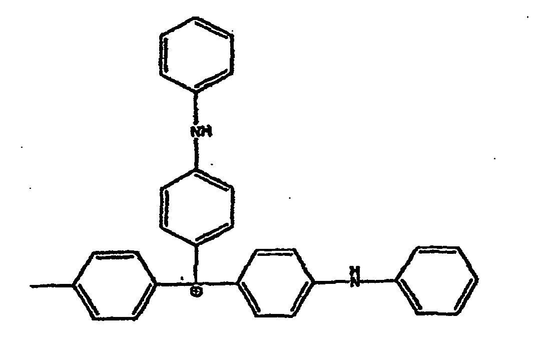 steht.

2. Zusammensetzung nach Anspruch 1, worin jede Phenylgruppe an jeder Verbindung durch einen Substituenten substituiert sein kann.

3. Zusammensetzung nach Anspruch 1, worin mindestens eine der Triphenylmethanverbindungen in Form eines Triphenylmethylcarbokations in einem Salz vorliegt.

4. Zusammensetzung nach Anspruch 3, worin es sich bei dem Salz um ein Hemisulfat und/oder ein Bisulfat handelt.

5. Zusammensetzung nach Anspruch 1, worin es sich bei der Tetraphenylmethanverbindung um eine freie Base und/oder ein Salz handelt.

6. Zusammensetzung nach Anspruch 5, worin es sich bei dem Salz um ein Sulfat und/oder ein Bisulfat handelt.

7. Zusammensetzung nach Anspruch 1, worin der Substituent aus der Gruppe bestehend aus Halogen, Alkyl, Alkoxy, -CN, -COOR² und Kombinationen davon ausgewählt ist, wobei R² für Alkyl steht.

8. Zusammensetzung nach Anspruch 1, worin auf der Basis des kombinierten Gewichts des mindestens einen Triphenylmethans und des mindestens einen Tetraphenylmethans in der Mischung das mindestens eine Triphenylmethan in der Mischung in einer Menge von 40 bis 80% auf Basis des Molenbruchs vorliegt.

9. Zusammensetzung nach Anspruch 1, worin die Mischung: 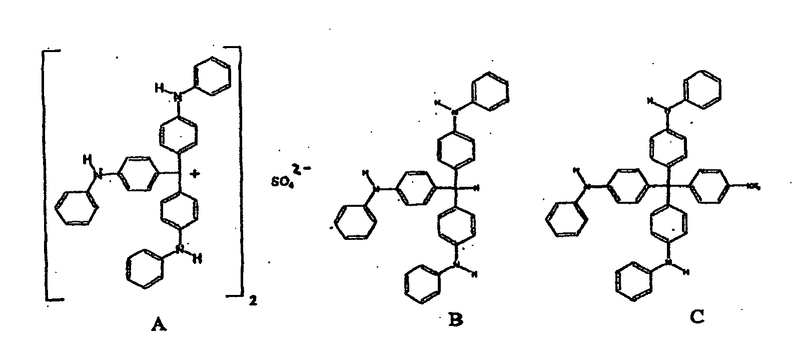 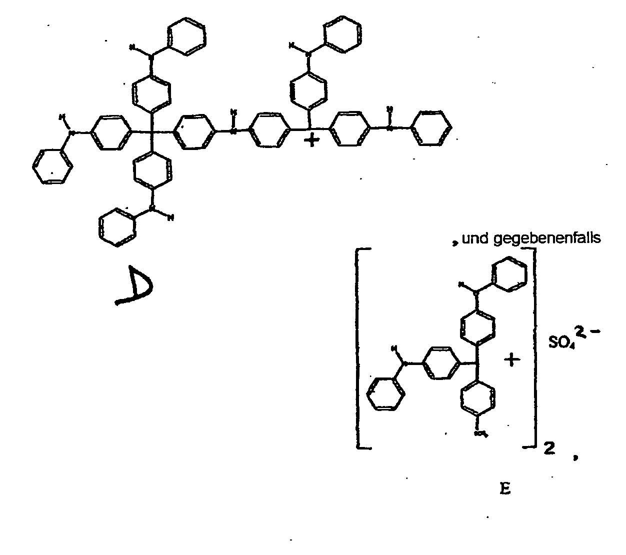 umfasst, wobei D gegebenenfalls in Form eines Salzes vorliegen kann.

10. Zusammensetzung nach Anspruch 9, worin auf der Basis des Gesamtgewichts der Mischung die Verbindungen A, B, C, D und E in der Mischung in Mengen auf der Basis des Molenbruchs von
A) 50 bis 90%,
B) 1 bis 10%,
C) 1 bis 50%,
D) 1 bis 10% und
E) 0 bis 90%
vorliegen.

11. Zusammensetzung nach Anspruch 1, worin die Mischung zur Triboaufladung in einem Bereich von 38 bis 45 µC/Gramm befähigt ist.

12. Zusammensetzung nach Anspruch 1, worin die Mischung amorph ist.

13. Zusammensetzung nach Anspruch 1, worin die Mischung in einer ein Tonerbindemittel umfassenden Tonerzusammensetzung vorliegt.

14. Zusammensetzung nach Anspruch 13, worin die Mischung in einer Menge von 0,25 bis 5 Gew.-%, bezogen auf die Tonerzusammensetzung, vorliegt.

15. Zusammensetzung nach Anspruch 13, worin die Tonerzusammensetzung eine Ladungskapazität von mindestens 25 µC/g aufweist.

16. Zusammensetzung nach Anspruch 13, worin die Tonerzusammensetzung eine Ladungskapazität von 38 bis 45 µC/g aufweist.

17. Zusammensetzung nach Anspruch 13, worin das Ladungssteuermittel in einer Menge von etwa 1 Gew.-%, bezogen auf die Zusammensetzung, vorliegt und die Tonerzusammensetzung eine Ladungskapazität von 38 bis 45 µC/g aufweist.

18. Zusammensetzung nach Anspruch 13, die ferner mindestens ein Toneradditiv umfasst.

19. Verfahren, umfassend die Verwendung der Zusammensetzung nach Anspruch 1 als Ladungssteuermittel in einer Tonerzusammensetzung bei einem elektrophotographischen Verfahren.

## Revendications

1. Composition comprenant un mélange d'au moins un composé triphénylméthane et d'au moins un composé tétraphénylméthane, chacun présentant une structure générale : 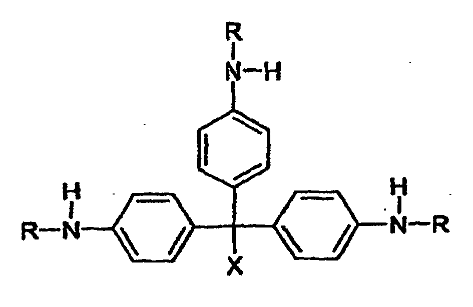 dans laquelle chaque R est indépendamment un atome d'hydrogène ou un groupe phényle ; X est au moins l'un parmi un atome d'hydrogène et un carbocation sur le groupe méthyle du triphénylméthane ; X est un groupe - phényl-NHY du tétraphénylméthane, dans lequel Y est au moins l'un parmi un atome d'hydrogène, un groupe phényle et un groupe

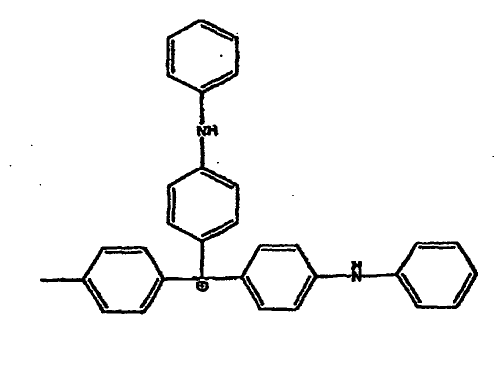

2. Composition selon la revendication 1, dans laquelle tout groupe phényle sur tout composé peut être substitué par un substituant.

3. Composition selon la revendication 1, dans laquelle au moins l'un des composés triphénylméthane est présent sous la forme d'un carbocation de triphénylméthyle dans un sel.

4. Composition selon la revendication 3, dans laquelle le sel est au moins l'un parmi un hémi-sulfate et un bisulfate.

5. Composition selon la revendication 1, dans laquelle le composé tétraphénylméthane est au moins l'un parmi une base libre et un sel.

6. Composition selon la revendication 5, dans laquelle le sel est au moins l'un parmi un sulfate et un bisulfate.

7. Composition selon la revendication 1, dans laquelle le substituant est choisi parmi le groupe constitué d'un atome d'halogène, d'un groupe alkyle, d'un groupe alcoxy, d'un groupe -CN, d'un groupe -COOR², et de leurs combinaisons, dans lequel R² est un groupe alkyle.

8. Composition selon la revendication 1, dans laquelle, par rapport à un poids combiné de l'au moins un triphénylméthane et de l'au moins un tétraphénylméthane dans le mélange, l'au moins un triphénylméthane est présent dans le mélange en une quantité de 40 à 80 %, basée sur une fraction molaire.

9. Composition selon la revendication 1, dans laquelle le mélange comprend : 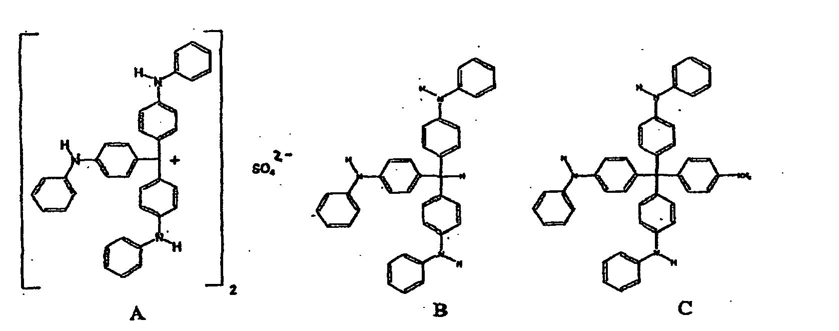 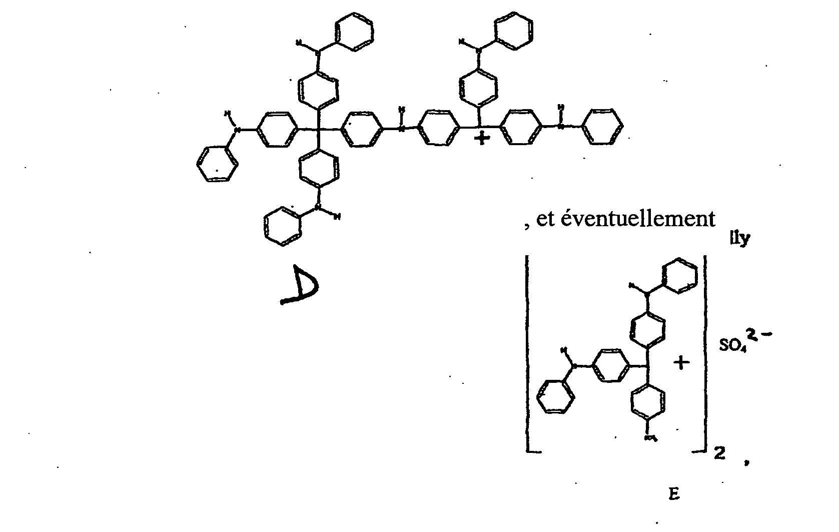 éventuellement, où D peut être présent sous la forme d'un sel.

10. Composition selon la revendication 9, dans laquelle, par rapport à un poids total du mélange, les composés A, B, C, D et E sont présents dans le mélange en quantités, basées sur une fraction molaire,
A) de 50 à 90 %,
B) de 1 à 10 %,
C) de 1 à 50 %,
D) de 1 à 10 %, et
E) de 0 à 90 %.

11. Composition selon la revendication 1, dans laquelle le mélange est capable de tribo-charge dans une plage de 38 à 45 µC/gramme.

12. Composition selon la revendication 1, dans laquelle le mélange est amorphe.

13. Composition selon la revendication 1, dans laquelle le mélange est présent dans une composition de toner comprenant un liant de toner.

14. Composition selon la revendication 13, dans laquelle le mélange est présent en une quantité de 0,25 à 5 % en poids de la composition de toner.

15. Composition selon la revendication 13, dans laquelle la composition de toner présente une capacité de charge d'au moins 25 µC/gramme.

16. Composition selon la revendication 13, dans laquelle la composition de toner présente une capacité de charge de 38 à 45 µC/gramme.

17. Composition selon la revendication 13, dans laquelle l'agent de contrôle de charge est présent en une quantité d'environ 1 % en poids de la composition, et la composition de toner présente une capacité de charge de 38 à 45 µC/g.

18. Composition selon la revendication 13, comprenant en outre au moins un additif de toner.

19. Méthode comprenant l'utilisation de la composition selon la revendication 1 en tant qu'agent de contrôle de charge dans une composition de toner dans un procédé électrophotographique.
